# EUROPEAN PATENT SPECIFICATION

(11) **EP 0 821 868 B1**
(45) Date of publication and mention of the grant of the patent: **18.04.2001**
(21) Application number: 97305824.1
(22) Date of filing: 01.08.1997
(51) Int. Cl.: A01D 34/71, A01D 43/06

(54) **Lawnmower**
Rasenmäher
Tondeuse à gazon

(30) Priority: 01.08.1996 GB 9616180
(43) Date of publication of application: 04.02.1998
(73) Proprietor: ELECTROLUX OUTDOOR PRODUCTS LIMITED, Newton Aycliffe, Co Durham DL5 6UP (GB)
(72) Inventor: Park, Keith, Ellerton, York Y04 4NX (GB)
(74) Representative: Pratt, David Martin

(56) References cited:
- EP-A- 0 501 674
- EP-A- 0 511 766
- EP-A- 0 579 386
- EP-A- 0 614 603
- US-A- 4 043 100

## Description

This invention relates to a lawnmower, and in particular to a so-called "rotary lawnmower" which includes a deck defining a cutting chamber, a cutter blade rotatable within the cutting chamber about a substantially vertical axis, and a grass collection receptacle within which cut grass is collected.

A known wheeled rotary lawnmower (see EP 579 386) includes a deck which defines a cutting chamber within which a cutter blade rotates, the deck including access means in the form of an aperture or duct which leads cut grass to a receptacle within which it is collected. A fan blows air through the cutting chamber and the access means into the receptacle, and sucks air from the receptacle for recirculation. The receptacle is mounted behind the deck, and this can lead to the mower tilting as grass collects within the receptacle. It also tends to make the lawnmower difficult to manoeuvre.

One way of avoiding such tilting and manoeuvrability problems would be to position the receptacle above the deck. Unfortunately, in this case, it would be necessary to direct the air and cut grass around a longer and tighter curve than is normal for a rear-mounted receptacle in order to take it from the cutting chamber to the receptacle. It is very difficult to re-direct cut grass round such a long tight curve, since it tends to drop out of a curved stream of air and clog the mower. EP 501 674 describes a lawnmower of this type.

The aim of the invention is to provide an improved wheeled rotary lawnmower.

The present invention provides a lawnmower comprising a deck defining a cutting chamber, the deck including an aperture for passage of cut grass from the cutting chamber, the deck being provided with at least one rotary support at its front and with at least one rotary support at its rear, a cutter blade rotatable within the cutting chamber about a substantially vertical axis, a grass collection receptacle including an inlet for entry of the cut grass entrained in a stream of primary air from the cutting chamber, and an air moving device located outside the cutting chamber for blowing a stream of secondary air into the grass collection receptacle via the inlet, the stream of secondary air being drawn in through a secondary air inlet and serving to complement the primary air flow through the receptacle, and to assist in deflecting the cut grass entrained in the primary air stream into the interior of the receptacle, wherein the receptacle is positioned above the deck and substantially between the front and rear rotary supports.

In a preferred embodiment, an impeller constitutes the air moving device, and the lawnmower further comprises a motor for driving the impeller. Preferably, the motor and the impeller are mounted on the deck outside the cutting chamber, and conveniently the impeller is fixed to the output shaft of the motor.

Preferably, the lawnmower further comprises a second impeller mounted within the cutting chamber for rotation with the cutter blade. Advantageously, the motor drives the second impeller and the cutter blade via a drive line, the rotation of the second impeller and the cutter blade generating the stream of primary air.

The lawnmower may further comprise a passage disposed between the aperture in the deck and the inlet into the receptacle. Advantageously, part of the passage is formed with the deck, the remaining part of the passage being formed with the receptacle.

Preferably, the receptacle is formed with at least one air-permeable wall region. Conveniently, the side walls of the receptacle are air-permeable, and the receptacle is provided with an air-permeable lid.

The lid may be mounted on the receptacle for movement between open and closed positions, and preferably it is detachably mounted on the receptacle.

Advantageously, each of the rotary supports is constituted by a support wheel.

One form of lawnmower constructed in accordance with the invention will now be described, by way of example, with reference to the drawings, in which.
Figure 1 is a cross-sectional side view of the lawnmower, and
Figure 2 is a cross-sectional plan view of the lawnmower of Figure 1.

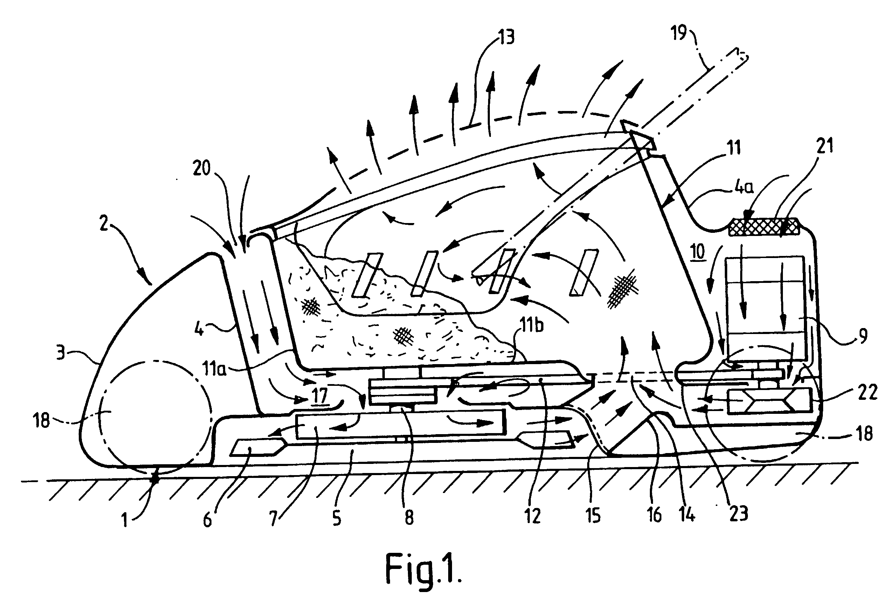

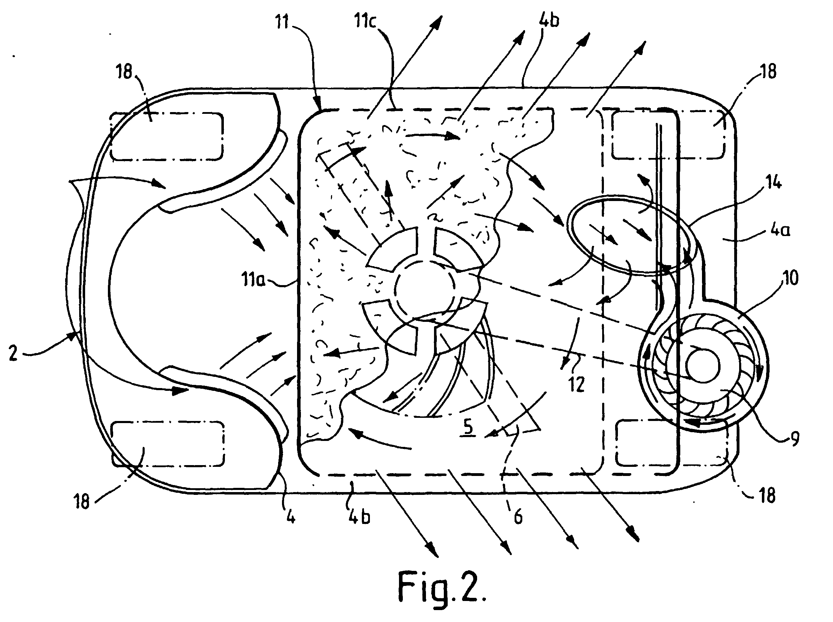

Referring to the drawings, Figures 1 and 2 show a lawnmower having a base or deck 1, and a housing 2 mounted above the deck, the housing having a curved front surface 3. The housing 2 defines a large internal cavity bounded by a front wall 4 (which depends from the curved front surface 3), a rear wall 4a, and side walls 4b (see Figure 2). The deck 1 is shaped like an inverted dish, so as to define a cutting chamber 5 within which a cutter blade 6 and an impeller 7 are mounted on a common drive shaft 8 for rotation about a vertical axis. A motor 9 is mounted within a motor chamber 10 defined by the rear wall 4a of the housing 2 and a grass collection receptacle 11 mounted within the internal cavity. The axis of rotation of the output shaft of the motor 9 is off-set from the axis of rotation of the drive shaft 8, and so a drive belt 12 connects them together. The grass collection receptacle 11 is supported above the deck 1.

The grass collection receptacle 11 is an open-topped box or basket having air-impermeable front and base walls 11a and 11b respectively, and air-permeable side walls 11c. The receptacle 11 is provided with a detachable air-permeable lid 13. The base wall 11b of the receptacle 11 is formed with an inlet 14 through which cut grass enters. The deck 1 includes an aperture 15 which opens into a passage 16 which leads into the grass collection receptacle 11 via the inlet 14.

The front, base and side walls 11a, 11b and 11c of the receptacle 11 are spaced from the adjacent walls of the internal cavity of the housing 2 to define a plenum chamber 17 therebetween.

The housing 2 is supported above the ground by four ground wheels 18. The receptacle 11 is located entirely between the front and rear front wheels 18 so that the weight of the collected grass is centrally located in order to maintain stability. The mower is controlled by a user who grasps a handle 19 which is attached to the housing 2.

As shown in Figure 1, the front wall 11a of the receptacle is spaced from the front wall 4 of the housing 2 to define an air-inlet 20. A secondary air-inlet 21 is provided in the rear wall 4a of the housing 2, through which secondary inlet air is drawn by a secondary impeller 22 mounted directly beneath the motor 9 for direct drive by the motor drive shaft. This secondary air cools the motor 9, as is described below. The secondary air drawn in by the secondary impeller 22 is blown into the receptacle 11 via an inlet 23 formed in the passage 16 adjacent to the inlet 14.

In operation, the motor 9 drives the cutter blade 6 and the impeller 7 via the drive belt 12. The impeller 7 draws air into the cutting chamber 5, via the air inlet 20, from atmosphere. The impeller 7 blows this air through the aperture 15, the passage 16 and the inlet 14 into the grass collection receptacle 11. The cutter blade 6 rotates and, as the lawnmower advances, cuts grass. The cut grass is transported around the cutting chamber 5, being entrained by an air flow generated by the cutter blade tips and by the impeller 7.

The secondary impeller 22 blows air into the receptacle 11 via the inlet 23, the top of the passage 16 and the inlet 14. This secondary stream of blown air helps to re-direct cut grass round the curved path leading from the cutting chamber 5 to the interior of the receptacle 11. In particular, the blown air maintains the cut grass in the stream of primary air generated by the impeller 7 and the cutter blade 6, thereby preventing cut grass dropping out of the air stream and blocking the passage 16. In order to ensure that this secondary stream of blown air carries out the required re-direction function, air must escape very efficiently from the receptacle 11, this being the reason for the lid 13 and side walls 11c being air-permeable, otherwise pressure would build up in the receptacle, and this would reduce the force of the secondary stream.

It will be apparent that the provision of the secondary blown air enables the wheeled rotary lawnmower described above to incorporate a grass collection receptacle 11 that is positioned above the deck 2. Indeed, the receptacle 11 is positioned entirely inside the "footprint" of the front and rear wheels 18 of the lawnmower. This leads to improved manoeuvrability of the lawnmower, whilst substantially reducing the risk of the mower tilting, during use, if grass collects unevenly in the receptacle. Removal of this tilting risk helps to ensure even cutting, and substantially reduces the possibility of the blade 6 tilting sufficiently to scuff the ground.

It will be apparent that modifications could be made to the lawnmower described above. For example, the passage 16 of the lawnmower may be difficult to mould in one piece with the deck 1 It may be, therefore, preferable to mould half the passage with the deck, and to mould the other half with the receptacle 11. An advantage of this is that, if the passage 16 becomes blocked with cut grass, removal of the receptacle 11 will open the passage, thereby facilitating removal of the blockage.

## Claims

1. A lawnmower comprising a deck (1) defining a cutting chamber (5), the deck including an aperture (15) for passage of cut grass from the cutting chamber, the deck being provided with at least one rotary support (18) at its front and with at least one rotary support (18) at its rear, a cutter blade (6) rotatable within the cutting chamber about a substantially vertical axis, a grass collection receptacle (11) including an inlet (14) for entry of the cut grass entrained in a stream of primary air from the cutting chamber, and an air moving device (22) located outside the cutting chamber for blowing a stream of secondary air into the grass collection receptacle via the inlet, the stream of secondary air being drawn in through a secondary air inlet (21) and serving to complement the primary air flow to the receptacle, and to assist in deflecting the cut grass entrained in the primary air stream into the interior of the receptacle, wherein the receptacle is positioned above the deck and substantially between the front and rear rotary supports.

2. A lawnmower according to claim 1, wherein an impeller (22) constitutes the air moving device, and wherein the lawnmower further comprises a motor (9) for driving the impeller.

3. A lawnmower according to claim 2, wherein the motor (9) and the impeller (22) are mounted on the deck (1) outside the cutting chamber (5).

4. A lawnmower according to claim 2 or claim 3, wherein the impeller (22) is fixed to the output shaft of the motor (9).

5. A lawnmower according to any one of claims 2 to 4, further comprising a second impeller (7) mounted within the cutting chamber (5) for rotation with the cutter blade (6).

6. A lawnmower according to claim 5, wherein the motor (9) drives the second impeller (7) and the cutter blade (6) via a drive line (12), the rotation of the second impeller and the cutter blade generating the stream of primary air.

7. A lawnmower according to any one of claims 1 to 6, further comprising a passage (16) disposed between the aperture (15) in the deck and the inlet (14) into the receptacle.

8. A lawnmower according to claim 7, wherein part of the passage (16) is formed with the deck (1), the remaining part of the passage being formed with the receptacle (11).

9. A lawnmower according to any one of claims 1 to 8, wherein the receptacle (11) is formed with at least one air-permeable wall region (11c).

10. A lawnmower according to claim 9, wherein the side walls (11c) of the receptacle (11) are air-permeable.

11. A lawnmower according to claim 9 or claim 10, wherein the receptacle (11) is provided with an air permeable lid (13).

12. A lawnmower according to claim 11, wherein the lid (13) is mounted on the receptacle (11) for movement between open and closed positions.

13. A lawnmower according to claim 12, wherein the lid (13) is detachably mounted on the receptacle (11).

14. A lawnmower according to any one of claims 1 to 13, wherein each of the rotary supports is constituted by a support wheel (18).

## Patentansprüche

1. Rasenmäher, mit einem eine Schneidkammer (5) bildenden Grundteil, wobei das Grundteil eine Öffnung (15) für den Durchtritt von geschnittenem Gras aus der Schneidkammer aufweist, wobei das Grundteil mit wenigstens einer drehbaren Stütze (18) an seiner Vorderseite und mit wenigstens einer drehbaren Stütze (18) an seiner Rückseite versehen ist, einer Schneidklinge (6), die innerhalb der Schneidkammer um eine im wesentlichen vertikale Achse drehbar ist, einem Grassammelbehälter (11), der einen Einlass (14) zum Eintritt von geschnittenem Gras aufweist, das in einem Primärluftstrom von der Schneidkammer mitgerissen wird, und mit einer Luftbewegungseinrichtung (22), die außerhalb der Schneidkammer für das Einblasen von Sekundärluft durch den Einlass in den Grassammelbehälter angeordnet ist, wobei der Sekundärluftstrom durch einen sekundären Lufteinlass (21) ansaugbar ist, und die zur Ergänzung des Primärluftstroms zu dem Aufnahmebehälter und zur Unterstützung zum Umlenken des in dem Luftstrom mitgerissenen, geschnittenen Grases in das Innere des Sammelbehälters dient, wobei der Sammelbehälter oberhalb des Grundteils und im wesentlichen zwischen den vorderen und hinteren Drehstützen angeordnet ist.

2. Rasenmäher nach Anspruch 1,
bei dem ein Gebläserad (22) die Luftbewegungseinrichtung bildet und bei dem der Rasenmäher weiterhin einen Motor (9) zum Antreiben des Gebläserades aufweist.

3. Rasenmäher nach Anspruch 2,
bei dem der Motor und das Gebläserad (22) auf dem Grundteil (1) außerhalb der Schneidkammer (5) montiert sind.

4. Rasenmäher nach Anspruch 2 oder Anspruch 3,
bei dem das Gebläserad (22) an der Abtriebswelle des Motors (9) befestigt ist.

5. Rasenmäher nach einem der Ansprüche 2 bis 4,
mit einem zweiten Gebläserad (7), das im Inneren der Schneidmaschine (5) zur Drehung mit der Schneidklinge (6) montiert ist.

6. Rasenmäher nach Anspruch 5,
bei dem der Motor (9) das zweite Gebläserad (7) und die Schneidklinge (6) über eine Transmission (12) antreibt, wobei die Drehung des zweiten Gebläserades und der Schneidklinge den Primärluftstrom erzeugt.

7. Rasenmäher nach einem der Ansprüche 1 - 6,
mit einem Kanal (16), der zwischen der Öffnung (15) in dem Grundteil und dem Einlass (14) in dem Sammelbehälter angeordnet ist.

8. Rasenmäher nach Anspruch 7,
bei dem ein Abschnitt des Kanals (16) mit dem Grundteil (1) gebildet ist, wobei der verbleibende Abschnitt des Kanals mit dem Sammelbehälter (11) gebildet ist.

9. Rasenmäher nach einem der Ansprüche 1 - 8,
bei dem der Sammelbehälter (11) mit wenigstens einem luftdurchlässigen Tankbereich (11c) gebildet ist.

10. Rasenmäher nach Anspruch 9,
bei dem die Seitenwände (11c) des Sammelbehälters (11) luftdurchlässig sind.

11. Rasenmäher nach Anspruch 9 oder Anspruch 10,
bei dem der Sammelbehälter (11) mit einem luftdurchlässigen Deckel (13) versehen ist.

12. Rasenmäher nach Anspruch 11,
bei dem der Deckel (13) auf dem Sammelbehälter (11) zur Bewegung zwischen einer offenen und geschlossenen Stellung montiert ist.

13. Rasenmäher nach Anspruch 12,
bei dem der Deckel (13) lösbar auf dem Sammelbehälter (11) angebracht ist.

14. Rasenmäher nach einem der Ansprüche 1 - 13,
bei dem jede der Drehstützen von einem Stützrad (18) gebildet ist.

## Revendications

1. Tondeuse à gazon comprenant un châssis (1) qui définit une chambre de coupe (5), le châssis comportant une ouverture (15) pour le passage de l'herbe coupée venant de la chambre de coupe, le châssis étant pourvu d'au moins un support tournant (18) à sa partie avant et d'au moins un support tournant (18) à sa partie arrière, une lame de coupe (6) qui peut tourner à l'intérieur de la chambre de coupe autour d'un axe sensiblement vertical, un réceptacle de collecte d'herbe (11) qui comporte une entrée (14) pour l'entrée de l'herbe coupée entraînée dans un flux d'air primaire venant de la chambre de coupe, et un dispositif de déplacement d'air (22) placé à l'extérieur de la chambre de coupe pour souffler un flux d'air secondaire vers le réceptacle de collecte d'herbe via l'entrée, le flux d'air secondaire étant aspiré à travers une entrée d'air secondaire (21) et servant à compléter le flux d'air primaire vers le réceptacle et à aider au changement de direction de l'herbe coupée entraînée dans le flux d'air primaire vers l'intérieur du réceptacle, dans laquelle le réceptacle est placé au-dessus du châssis et sensiblement entre les supports tournants avant et arrière.

2. Tondeuse selon la revendication 1, dans laquelle une roue de ventilateur (22) constitue le dispositif de déplacement d'air, et dans laquelle la tondeuse comprend en outre un moteur (9) pour entraîner la roue de ventilateur.

3. Tondeuse selon la revendication 2, dans laquelle le moteur (9) et la roue de ventilateur (22) sont montés sur le châssis (1) en dehors de la chambre de coupe (5).

4. Tondeuse selon la revendication 2 ou la revendication 3, dans laquelle la roue de ventilateur (22) est fixée à l'arbre de sortie du moteur (9).

5. Tondeuse selon une quelconque des revendications 2 à 4, comprenant en outre une deuxième roue de ventilateur (7) montée à l'intérieur de la chambre de coupe (5) pour rotation avec la lame de coupe (6).

6. Tondeuse selon la revendication 5, dans laquelle le moteur (9) entraîne la deuxième roue de ventilateur (7) et la lame de coupe (6) par l'intermédiaire d'une transmission (12), la rotation de la deuxième roue de ventilateur e-t de la lame de coupe engendrant le flux d'air primaire.

7. Tondeuse selon une quelconque des revendications 1 à 6, comprenant en outre un passage (16) disposé entre l'ouverture (15) du châssis et l'entrée (14) dans le réceptacle.

8. Tondeuse selon la revendication 7, dans laquelle une partie du passage (16) est formée avec le châssis (1), la partie restante du passage étant formée avec le réceptacle (11).

9. Tondeuse selon une quelconque des revendications 1 à 8, dans laquelle le réceptacle (11) comporte au moins une région de paroi perméable à l'air (11c).

10. Tondeuse selon la revendication 9, dans laquelle les parois latérales (11c) du réceptacle (11) sont perméables à l'air.

11. Tondeuse selon la revendication 9 ou la revendication 10, dans laquelle le réceptacle (11) est muni d'un couvercle perméable à l'air (13).

12. Tondeuse selon la revendication 11, dans laquelle le couvercle (13) est monté sur le réceptacle (11) pour un mouvement entre une position ouverte et une position fermée.

13. Tondeuse selon la revendication 12, dans laquelle le couvercle (13) est monté de façon détachable sur le réceptacle (11).

14. Tondeuse selon une quelconque des revendications 1 à 13, dans laquelle chacun des supports tournants est constitué par une roue porteuse (18).
